Europäisches Patentamt

European Patent Office

Office européen des brevets

(11) Veröffentlichungsnummer: **0 536 629 A2**

# (12) EUROPÄISCHE PATENTANMELDUNG

(21) Anmeldenummer: **92116702.9**

(22) Anmeldetag: **30.09.92**

(51) Int. Cl.5: **C08L 67/06**, //(C08L67/06, 67:06)

(30) Priorität: **11.10.91 DE 4133687**

(43) Veröffentlichungstag der Anmeldung:
**14.04.93 Patentblatt 93/15**

(84) Benannte Vertragsstaaten:
**AT CH DE ES FR GB IT LI NL**

(71) Anmelder: **BASF Aktiengesellschaft
Carl-Bosch-Strasse 38
W-6700 Ludwigshafen(DE)**

(72) Erfinder: **Lorenz, Reinhard, Dr.
Chenoverstrasse 11
W-6703 Limburgerhof(DE)**
Erfinder: **Zwecker, Joachim, Dr.
Moltkestrasse 18
W-6940 Weinheim(DE)**
Erfinder: **Esswein, Gerd, Dr.
Kurpfalzstrasse 78
W-6701 Maxdorf(DE)**

(54) **Schwundarm härtbare Polyester-Formmassen.**

(57) Die Erfindung betrifft eine schwundarm härtbare Formmasse aus einem ungesättigten Polyesterharz und einem thermoplastischen Polyester aus einer cycloaliphatischen Dicarbonsäure, vorzugsweise Tetrahydrophthalsäure, und Ethylenglykol oder Propylenglykol.

EP 0 536 629 A2

Die Erfindung betrifft eine schwundarm härtbare Formmasse auf Basis von ungesättigten Polyesterharzen, die einen thermoplastischen Polyester als Mittel zur Schwundkompensation enthalten.

Formmassen aus ungesättigten Polyesterharzen mit Zusätzen von Verstärkungsfasern und Füllstoffen ergeben nach der Härtung Formteile mit hoher Festigkeit, Wärmeformbeständigkeit und Lösungsmittelbeständigkeit. Sie haben daher zur Herstellung von Konstruktionswerkstoffen, z.B. im Automobilbau, eine große Bedeutung erlangt. Ein Problem stellt aber die Neigung der Formmasen dar, beim Härtungsvorgang zu schwinden, was zu inneren Spannungen, zur Bildung von Einfallstellen, Verzugserscheinung und Oberflächenwelligkeit führt.

Durch Zusatz bestimmter thermoplastischer Polymerer kann dieser Polymerisationsschwund reduziert werden. In der Praxis werden u.a. niedermolekulare gesättigte Polyester, insbesondere Polyethylenpropylenadipate eingesetzt, die eine ausreichende Schrumpfkompensation bewirken und Formteile mit guter Oberflächenstruktur ergeben. Sie wirken aber in der Duromermatrix des Formkörpers als Weichmacher, was zur Folge hat, daß die Formkörper eine verminderte Festigkeit und Steifigkeit aufweisen. Darüber hinaus ergeben sich bei niedrigen Härtungstemperaturen unter 80°C, wie sie z.B. beim resin-transfer-molding (RTM)-Verfahren üblich sind, verhältnismäßig hohe Reststyrolgehalte, was zu Geruchsbelästigungen führt und bei der Lackierung stört.

Der Erfindung lag somit die Aufgabe zugrunde, schwundarm härtbare Formmassen auf Basis von ungesättigten Polyestern bereitzustellen, die Formkörper mit ausgezeichneten mechanischen Eigenschaften, insbesondere hohe Steifigkeit und Festigkeit ergeben, welche geringe Reststyrolgehalte aufweisen, auch wenn sie bei verhältnismäßig niedrigen Temperaturen ausgehärtet werden.

Diese Aufgabe wird gelöst, wenn man zur Schwundkompensation einen thermoplastischen Polyester auf Basis einer cycloaliphatischen Dicarbonsäure mit einer Doppelbindung verwendet.

Gegenstand der Erfindung ist demzufolge eine schwundarm härtbare Formmasse aus einem ungesättigten Polyester A, einem Comonomeren B und 5 bis 50 Gew.-%, bezogen auf A + B + C, eines thermoplastischen Polyesters C, wobei die Polyester aus folgenden Molekülbausteinen aufgebaut sind:

A1   60 bis 100 Mol-% Maleinsäure

40 bis 0 Mol-% Phthalsäure, Isophthalsäure und/oder Terephthalsäure,

A2   60 bis 100 Mol-% Propylenglykol

40 bis 0 Mol-% Ethylenglykol, Diethylenglykol, Dipropylenglykol, Butandiol und/oder Neopentylglykol,

C1   35 bis 100 Mol-% einer cycloaliphatischen Dicarbonsäure mit einer Doppelbindung

65 bis 0 Mol-% einer gesättigten aliphatischen oder aromatischen Dicarbonsäure mit 4 bis 8 C-Atomen

C2   50 bis 100 Mol-% Ethylenglykol und/oder Propylenglykol

50 bis 0 Mol-% eines Diols mit 4 bis 10 C-Atomen.

In Formteilen, die aus diesen Formmassen durch Härtung hergestellt werden, weist der darin enthaltene thermoplastische Polyester eine Glastemperatur $T_g$ (nach DIN 53 445) von höher als 20°C, vorzugsweise von höher als 50°C auf, was mitverantwortlich ist für die guten mechanischen Eigenschaften der Formteile. Diese hohe Glastemperatur des Thermoplastbestandteils ist insofern überraschend, als die eingesetzten thermoplastischen Polyester C selbst niedrigere Glastemperaturen haben. Dieser Anstieg der Glastemperatur rührt wahrscheinlich von einer Pfropfreaktion des Styrols an der Doppelbindung des Polyesters C her.

In US-A 3 909 483 sind schwundarm härtbare Formmassen auf Basis von ungesättigten Polyesterharzen und carboxylgruppenterminierten gesättigten Polyestern mit einem Molekulargewicht zwischen 2000 und 25.000 beschrieben. Die gesättigten Polyester sind bevorzugt solche auf Basis von Adipinsäure, Bernsteinsäure und Tetrabromphthalsäure. Neben vielen anderen sind als Säurekomponenten auch Tetrahydrophthalsäure und Endomethylentetrahydrophthalsäure genannt. Die Druckschrift lehrt aber nicht, daß bei Einsatz gerade dieser Dicarbonsäuren sich Formmassen ergeben, die zu Formkörpern mit besonders guten mechanischen Eigenschaften aushärten. Insbesondere war der Anstieg der Glastemperatur bei der Härtung nicht zu erwarten, im Gegenteil: die Bezeichnung der Polyester als "gesättigt" zeigt, daß die Autoren der Druckschrift nicht mit einer Pfropfreaktion des Styrols an der Doppelbindung des Polyesters rechneten.

Ähnliches trifft auch auf die DE-A-34 26 425 zu, wo Mischungen aus ungesättigten Polyesterharzen, einem gesättigten Polyester mit einem Molekulargewicht von 800 bis 10.000 g•Mol$^{-1}$ und einem weiteren verträglichen Thermoplasten beschrieben sind. Auch hier sind Polypropylenadipate bevorzugt und Tetrahydrophthalsäure ist neben vielen anderen Dicarbonsäure-Komponenten für die Herstellung des "gesättigten" Polyesters genannt.

Zu den einzelnen Komponenten ist folgendes zu sagen:

A) Bevorzugte ungesättigte Polyester sind solche die ausschließlich aus Maleinsäure und Propylenglykol aufgebaut sind und solche, bei denen 5 bis 30 Mol-% der Maleinsäure durch Phthalsäure und 5 bis 30 Mol-% des Propylenglykols durch Dipropylenglykol ersetzt sind. Die ungesättigten Polyester weisen vorzugsweise eine Säurezahl zwischen 15 und 50 auf (gemessen durch Titration des in Aceton gelösten ungesättigten Polyesters mit 0,1 n methanolischer KOH) und ein mittleres Molekulargewicht (Zahlenmittel) zwischen 1000 und 5000 g/Mol (gemessen durch Bestimmung der Säurezahl und OH-Zahl).

B) Als Comonomere können die üblichen copolymerisierbaren ethylenisch ungesättigten Verbindungen verwendet werden, vorzugsweise Styrol, daneben substituierte Styrole, (meth)acrylsäureester und Allylverbindungen. Das Gewichtsverhältnis A:B kann zwischen 65:35 und 40:60 liegen.

Die Komponente C ist ein thermoplastischer Polyester, dessen Dicarbonsäureeinheiten Doppelbindungen enthalten. Sie sind aufgebaut aus

C1    35 bis 100 Mol-% einer cycloaliphatischen Dicarbonsäure mit einer Doppelbindung, vorzugsweise 1,2,3,6-Tetrahydrophthalsäure, 3,6-Endomethylen-1,2,3,6-tetrahydrophthalsäure und/oder 1,4,5,6,7,7-Hexachlor-5-norbonen-2,3-dicarbonsäure (HET-Säure) und 65 bis 0 Mol-% einer oder mehrerer gesättigter aliphatischer oder aromatischer Dicarbonsäuren mit 4 bis 8 C-Atomen, vorzugsweise Adipinsäure, Glutarsäure, Bernsteinsäure, Phthalsäure, Isophthalsäure und/oder Terephthalsäure

einerseits und

C2    50 bis 100 Mol-% Ethylenglykol und/oder Propylenglykol und 50 bis 0 Mol-% eines Diols mit 4 bis 10 C-Atomen, vorzugsweise Butandiol, Diethylenglykol, Dipropylenglykol und/oder Neopentylglykol

andererseits.

Die thermoplastischen Polyester sind im allgemeinen höhermolekularer als der ungesättigte Polyester, ihr mittleres Molekulargewicht (Zahlenmittel) $\overline{M}_n$ ist vorzugsweise höher als 2000, bei SMC-Formmassen bevorzugt höher als 3000 g•Mol$^{-1}$.

Ihre Schmelzviskosität (150°C, Schergeschwindigkeit 10.000 s$^{-1}$) liegt bevorzugt zwischen 800 und 10.000 mPa•s. Derartige hochviskose Polyester lassen sich kontrolliert durch Einwirkung von Luftsauerstoff auf die Polyesterschmelze bei Temperaturen um etwa 200°C herstellen.

Die erfindungsgemäße Harzmischung weist vorzugsweise eine Viskosität von 100 bis 1 000, insbesondere von 200 bis 500 mPa•s, bei 23°C auf. Sie liegt bei Raumtemperatur als klare oder leicht trübe, einphasige Flüssigkeit vor, die mehrere Monate lang gelagert werden kann. Kurz vor dem Härten werden dem Harz Initiator und gegebenenfalls Beschleuniger zugesetzt, die bei Temperaturerhöhung die Polymerisation auslösen. Dabei tritt dann in der Nähe des Gelpunktes eine erste Trübung auf, da das vernetzende ungesättigte Polyesterharz und der thermoplastische Polyester separate Phasen bilden. Mit fortschreitender Härtung treten im Formteil Schwundspannungen auf. Diese Spannungen lösen sich, wenn der thermoplastische Polyester als weiche Phase unter Hohlraumbildung mechanisch nachgibt. Schwundkompensation besteht also in der Verteilung des makroskopischen Schwundes auf viele kleine Hohlräume. Elektronenmikroskopische Untersuchungen zeigen, daß es sich bei der morphologischen Struktur des gehärteten Formstoffs um eine "Perlstruktur" handelt.

Die erfindungsgemäße Formmasse kann die üblichen Zusatzstoffe enthalten, wie z.B. innere Trennmittel, Inhibitoren und Beschleuniger.

Füllstoffe, wie Kreide, Quarz, Koalin oder Aluminiumoxidhydrat können in Mengen von 0 bis 300 Gew.-%, bezogen auf A + B + C anwesend sein, Verstärkungsfasern in Mengen 20 bis 200 Gew.-%.

Geeignete Initiatoren für die Härtung beim RTM-Verfahren (bei 50 bis 80°C) sind die üblichen Peroxide, wie z.B. Methylethylketonperoxid, Acetylacetonperoxid, tert.-Butylperethylhexanoat, sowie Mischungen davon. Sie werden gewöhnlich in Mengen von 1 bis 4 Gew.-%, bezogen auf das Harz, zugesetzt. Sie können mit üblichen Cobaltbeschleunigern oder Aminbeschleunigern in Mengen von 0,05 bis 1 Gew.-%, bezogen auf A + B + C, kombiniert werden.

Für die Härtung beim "sheet-molding-compound" (SMC)- und "bulk-molding-compound" (BMC)-Verfahren werden Peroxide eingesetzt, die bei 120 bis 180°C wirksam sind, z.B. tert.-Butylperoxid, tert.-Butylperbenzoat und 1,1-Di(tert.-butylperoxy)-3,3,5-trimethylcyclohexan.

Die erfindungsgemäß hergestellten Formteile finden insbesondere als Karrosserieteile in Kraftfahrzeugen Verwendung.

Die in den Beispielen genannten Teile und Prozente beziehen sich auf das Gewicht.

Beispiele

1. Herstellung des ungesättigten Polyesterharzes A + B

4,0 mol Maleinsäureanhydrid, 0,15 g Hydrochinon und 4,48 mol Propylenglykol werden in einer 2 l-Glasapparatur mit Rührer, Stickstoffbegasung sowie Dephlegmator mit Dephlegmatorkopf, Kondensator und Kondensatvorlage auf 130°C erhitzt. Nach Abklingen der exothermen Reaktion heizt man mit 0,3°C/min auf 200°C auf und hält bei dieser Temperatur bis eine Säurezahl von 24 bis 27 mg KOH/g Polymer erreicht ist. Man kühlt auf 130°C ab, gibt 300 g Styrol zu, und stellt mit weiteren Styrolzugaben einen Feststoffgehalt von etwa 65 % ein.

2. Herstellung der thermoplastischen Polyester

4,0 mol 1,2,3,6-Tetrahydrophthalsäureanhydrid und 4,0 mol Ethylenglykol sowie 0,06 g Hydrochinon werden in einer 2 l-Glasapparatur mit Rührer, Stickstoffbegasung sowie Dephlegmator mit Dephlegmatorkopf, Kondensator und Kondensatvorlage auf 130°C aufgeheizt. Nach Abklingen der exothermen Reaktion heizt man mit 0,3°C/min auf 200°C auf und hält bei dieser Temperatur, bis die Schmelze eine Viskosität von ca. 800 mPa•s (gemessen bei 150°C und einer Schergeschwindigkeit von 10.000 s$^{-1}$) aufweist. Dann wird auf 130°C abgekühlt, 1000 g Styrol werden zugegeben und mit weiteren Styrolzugaben wird ein Feststoffgehalt von etwa 40 % eingestellt (Polyester C1).

Polyester C2 wurde nach einem speziellen Verfahren auf eine hohe Schmelzviskosität eingestellt: Die Reaktion erfolgte zunächst wie für C1 beschrieben, wurde jedoch bis zu einer Schmelzviskosität von 2500 mPa•s geführt. Dann wurde anstelle von Stickstoff eine Mischung aus Luft und Stickstoff (Verhältnis 1:3) über die Schmelze geführt und die Viskosität wurde in kurzen Zeitabständen gemessen. Bei einem Wert von ca. 9000 mPa•s (bei 150°C und Schergeschwindigkeit von 1500 s$^{-1}$) wurde der Prozeß abgebrochen, der Ansatz abgekühlt und, wie bei C1 beschrieben, mit Styrol abgemischt.

Die Polyester C3 bis C9 wurden wie Polyester C1 mit den aus der Tabelle ersichtlichen Abwandlungen hergestellt.

3. Härtung und Prüfung der Formmassen

a) Zur Prüfung der Polyester auf ihre Eignung zur Schwundkompensation wurden 60 Teile Harz A + B und 40 Teile Polyester-Lösung C gemischt. Geeignete Polyester ergeben einphasige Mischungen, die mindestens 4 Wochen lagerfähig sind.

b) RTM-Anwendung

Eine Mischung wird hergestellt aus

60 Tl. Harz A + B

40 Tl. Polyester-Lösung C

1 Tl. Acetylacetonperoxid

0,1 Tl. Cobaltoctoat (1 %ig in Styrol)

Diese Mischung wird in ein Plattenwerkzeug injiziert, das mit Glasmatten ausgelegt und auf 60°C aufgeheizt ist. Nach 1 h wird entformt. Schwundkompensation, Glanz und Welligkeit der Formteiloberfläche, sowie Styrolgeruch werden beurteilt.

c) SMC-Anwendung

Es wird eine Mischung hergestellt aus

60 Tl. Harz A + B

40 Tl. Polyesterlösung C

1,5 Tl. tert.-Butylperoxid

4,0 Tl. Zinkstearat

2,5 Tl. MgO-Paste (®LUVATOL MK 35)

200 Tl. Kreide (®Millicarb).

Auf einer SMC-Maschine werden

72 Tl. dieser Paste mit

28 Tl. Glasfasern der Schnittlänge 25 mm zu einem flächigen Halbzeug (SMC) verarbeitet. Nach 7-tägiger Reifung bei Raumtemperatur wird 2 min lang bei 155°C verpreßt. Die Preßteile werden auf ihre Oberflächeneigenschaften und ihre mechanischen Eigenschaften geprüft.

Die Prüfergebnisse sind aus der Tabelle ersichtlich.

Die angegebene Tg ist die Glastemperatur des thermoplastischen Polyesters.

Der Versuch mit Polyester C9 ist nicht erfindungsgemäß.

4

Tabelle

| Polyester | Säure | Diol | Säurezahl mg KOH/g | Viskosität mPa·s | Tg vor Härtung °C | Tg nach Härtung °C | Eignung |
|---|---|---|---|---|---|---|---|
| C1 | THPS | Ethylenglykol | 24,2 | 810 | 21 | 60 | RTM: sehr gut |
| C2 | THPS | Ethylenglykol | 6 | 9000 | 22 | 70 | SMC: sehr gut |
| C3 | THPS | 1,2-Propylenglykol | 25,2 | 620 | 26 | 68 | RTM: gut |
| C4 | THPS 65 mol-%<br>BS 35 mol-% | Ethylenglykol | 11,3 | 2200 | 11 | 43 | SMC: sehr gut |
| C5 | THPS 40 mol-%<br>BS 18 mol-%<br>GS 27 mol-%<br>ADS 15 mol-% | Ethylenglykol | 10,5 | 2780 | −5 | 21 | SMC: sehr gut |
| C6 | THPS | 1,4-Butandiol | 28,1 | 820 | −2 | | zweiphasig |
| C7 | THPS | Diethylenglykol | 22,9 | 820 | −5 | | zweiphasig |
| C8 | THPS | Dipropylenglykol | 26,8 | 250 | 1 | | zweiphasig |
| C9 | ADS | Ethylenglykol 60 mol-%<br>Propylenglykol 40 mol-% | 11 | 600 | −40 | −40 | RTM: schlecht |

THPS = 1,2,3,6-Tetrahydrophthalsäure
BS = Bernsteinsäure
GS = Glutarsäure
ADS = Adipinsäure

**Patentansprüche**

1. Schwundarm härtbare Formmasse aus einem ungesättigten Polyester A, einem Comonomeren B und 5 bis 50 Gew.-%, bezogen auf A + B + C, eines thermoplastischen Polyesters C, wobei die Polyester aus folgenden Molekülbausteinen aufgebaut sind:

A1   60 bis 100 Mol-% Maleinsäure
     40 bis 0 Mol-% Phthalsäure, Isophthalsäure
     und/oder Terephthalsäure,

A2   60 bis 100 Mol-% Propylenglykol
     40 bis 0 Mol-% Ethylenglykol, Diethylenglykol, Dipropylenglykol, Butandiol und/oder Neopentylglykol,

C1   35 bis 100 Mol-% einer cycloaliphatischen Dicarbonsäure mit einer Doppelbindung
     65 bis 0 Mol-% einer gesättigten aliphatischen oder aromatischen Dicarbonsäure mit 4 bis 8 C-Atomen

C2   50 bis 100 Mol-% Ethylenglykol und/oder Propylenglykol
     50 bis 0 Mol-% eines Diols mit 4 bis 10 C-Atomen.

2.   Formmasse nach Anspruch 1, dadurch gekennzeichnet, daß die cycloaliphatische Dicarbonsäure Tetrahydrophthalsäure ist.

3.   Formmasse nach Anspruch 1, dadurch gekennzeichnet, daß der thermoplastische Polyester C ein mittleres Molekulargewicht $\overline{M}_n$ von größer als 2000 g/Mol aufweist.

4.   Formteile, hergestellt durch Härtung der Formmasse nach Anspruch 1, dadurch gekennzeichnet, daß der darin enthaltene thermoplastische Polyester (nach der Härtung) eine Glastemperatur Tg (nach DIN 53 445) von höher als 20°C aufweist.

6